# EUROPÄISCHE PATENTANMELDUNG

(11) **EP 3 646 986 A1**
(43) Veröffentlichungstag der Anmeldung: **06.05.2020**
(21) Anmeldenummer: 18204305.9
(22) Anmeldetag: 05.11.2018
(51) Int. Cl.: B23Q 17/12, G05B 19/416

(54) **BEDIENERDEFINIERTE RATTERVERMEIDUNG**

(71) Anmelder: Siemens Aktiengesellschaft, 80333 München (DE)
(72) Erfinder: Bretschneider, Jochen, 73732 Esslingen (DE)

(57) **Zusammenfassung**

Eine Steuereinrichtung (6) einer Werkzeugmaschine nimmt eine Sollbearbeitung (9) entgegen, entsprechend derer ein Werkstück (2) durch ein Werkzeug (1) der Werkzeugmaschine bearbeitet werden soll. Die Steuereinrichtung (6) nimmt weiterhin vor der Bearbeitung des Werkstücks (2) über eine Schnittstelle (11) Regeln (10) entgegen. Die Regeln (10) definieren, auf welche Art und Weise im Falle von während der Bearbeitung des Werkstücks (2) auftretenden unerwünschten Schwingungen die Bearbeitung des Werkstücks (2) modifiziert werden soll. Die Steuereinrichtung (6) steuert die Werkzeugmaschine, so dass das Werkstück (2) durch das Werkzeug (1) bearbeitet wird. Die Steuereinrichtung (6) ermittelt während der Bearbeitung des Werkstücks (2) durch Auswertung erfasster Sensorsignale (S), ob unerwünschte Schwingungen auftreten oder nicht. In dem Fall, dass die unerwünschten Schwingungen nicht auftreten, führt die Steuereinrichtung (6) die Bearbeitung entsprechend der Sollbearbeitung (9) aus. In dem Fall, dass die unerwünschten Schwingungen auftreten, modifiziert die Steuereinrichtung (6) die Bearbeitung entsprechend der vorgegebenen Regeln (10).

## Beschreibung

Die vorliegende Erfindung geht aus von einem Bearbeitungsverfahren für ein Werkstück durch ein Werkzeug einer Werkzeugmaschine,
- wobei eine Steuereinrichtung der Werkzeugmaschine eine Sollbearbeitung entgegennimmt, entsprechend derer das Werkstück durch das Werkzeug bearbeitet werden soll,
- wobei die Steuereinrichtung die Werkzeugmaschine steuert, so dass das Werkstück durch das Werkzeug bearbeitet wird,
- wobei die Steuereinrichtung während der Bearbeitung des Werkstücks durch das Werkzeug durch Auswertung erfasster Sensorsignale ermittelt, ob unerwünschte Schwingungen auftreten oder nicht.

Die vorliegende Erfindung geht weiterhin aus von einem Steuerprogramm für eine Steuereinrichtung einer Werkzeugmaschine, wobei das Steuerprogramm Maschinencode umfasst, wobei die Abarbeitung des Maschinencodes durch die Steuereinrichtung bewirkt, dass die Steuereinrichtung ein derartiges Betriebsverfahren ausführt.

Die vorliegende Erfindung geht weiterhin aus von einer Steuereinrichtung einer Werkzeugmaschine, wobei die Steuereinrichtung mit einem derartigen Steuerprogramm programmiert ist, so dass die Steuereinrichtung im Betrieb ein derartiges Betriebsverfahren ausführt.

Die genannten Gegenstände sind aus der WO 2017/012 801 A1 bekannt.

Bei der WO 2017/012 801 A1 erfolgt durch Auswertung erfasster Sensorsignale eine Erkennung unerwünschter Schwingungen. Weitergehende Maßnahmen sind der WO 2017/012 801 A1 jedoch nicht zu entnehmen.

Bei der spanenden Bearbeitung von Werkstücken durch Werkzeugmaschinen kann es zu einer unerwünschten Anregung von Schwingungen kommen. Die Schwingungen können an der Werkzeugmaschine, am Werkstück oder am Werkzeug auftreten. Sie sind in Fachkreisen als sogenanntes Rattern bekannt. Rattern führt in aller Regel zu einer qualitativ minderwertigen Oberfläche des bearbeiteten Werkstücks. Weiterhin führt Rattern zu erhöhtem Verschleiß in Lagern und Führungen der Werkzeugmaschine. In manchen Fällen kann es sogar zu direkten Schäden kommen, beispielsweise zu einem Brechen des Werkzeugs.

Zur Vermeidung des Ratterns sind verschiedene Vorgehensweisen bekannt. Im einfachsten Fall werden eine Vorschubgeschwindigkeit und/oder eine Spindeldrehzahl, mit der das Werkzeug oder das Werkstück rotiert werden, reduziert. In diesem Fall erfolgt, sofern durch die ergriffenen Maßnahme das Rattern vermieden werden kann, zwar eine ordnungsgemäße Bearbeitung des Werkstücks, jedoch mit erhöhtem Zeitaufwand und damit mit verringerter Produktivität. Es sind auch andere Vorgehensweisen bekannt. Beispielsweise ist bekannt, einer an sich vorgegebenen und konstanten Spindeldrehzahl eine Oszillation zu überlagern, so dass die tatsächliche Spindeldrehzahl um die vorgegebene Spindeldrehzahl herum variiert.

Die bekannten Maßnahmen werden in der Praxis aber nur selten eingesetzt. In der Praxis greift vielmehr in der Regel eine Bedienperson der Werkzeugmaschine manuell in die Bearbeitung ein. Insbesondere verstellt die Bedienperson in der Regel mittels sogenannter Overrides die Vorschubgeschwindigkeit und/oder die Spindeldrehzahl. Meist führt dies sehr schnell zu einem Abklingen des Ratterns. Die Vorgehensweise ist insbesondere deshalb oftmals von großem Erfolg geprägt, weil die Bedienperson aufgrund der technologischen Kenntnis des Bearbeitungsvorgangs oftmals sehr gut weiß, an welchen Stellen der Bearbeitung Rattern auftreten kann und wie dem Rattern begegnet werden kann. Hierbei ist jedoch nicht bei jedem Bearbeitungsvorgang dieselbe Maßnahme erfolgreich. Vielmehr hängt es vom konkreten Bearbeitungsvorgang ab, ob - beispielsweise - eine Reduzierung der Spindeldrehzahl oder eine Reduzierung der Vorschubgeschwindigkeit oder eventuell sogar eine Erhöhung der Spindeldrehzahl oder der Vorschubgeschwindigkeit dazu führt, dass das Rattern nicht mehr auftritt.

Die Aufgabe der vorliegenden Erfindung besteht darin, Möglichkeiten zu schaffen, mittels derer die Bedienperson auf einfache und zuverlässige Weise ihr Erfahrungswissen in den Bearbeitungsprozess einbringen kann und dadurch ein Rattern zumindest in der weitaus überwiegenden Mehrzahl von Fällen vermieden werden kann.

Die Aufgabe wird durch ein Betriebsverfahren mit den Merkmalen des Anspruchs 1 gelöst. Vorteilhafte Ausgestaltungen des Betriebsverfahrens sind Gegenstand der abhängigen Ansprüche 2 bis 11.

Erfindungsgemäß wird ein Betriebsverfahren der eingangs genannten Art dadurch ausgestaltet,
- dass die Steuereinrichtung der Werkzeugmaschine vor der Bearbeitung des Werkstücks durch das Werkzeug über eine Schnittstelle Regeln entgegennimmt,
- dass die Regeln definieren, auf welche Art und Weise im Falle von während der Bearbeitung des Werkstücks durch das Werkzeug auftretenden unerwünschten Schwingungen die Bearbeitung des Werkstücks durch das Werkzeug modifiziert werden soll, und
- dass die Steuereinrichtung in dem Fall, dass die unerwünschten Schwingungen nicht auftreten, die Bearbeitung entsprechend der Sollbearbeitung ausführt und in dem Fall, dass die unerwünschten Schwingungen auftreten, die Bearbeitung entsprechend der vorgegebenen Regeln modifiziert.

Es wird also die Möglichkeit geschaffen, konkret für den jeweiligen Bearbeitungsvorgang zu spezifizieren, wie die Steuereinrichtung in dem Fall, dass die unerwünschten Schwingungen (= Rattern) auftreten, reagieren soll. Damit besteht die Möglichkeit, Erfahrungswissen in die Steuereinrichtung einzubringen.

Die Regeln als solche sind üblicherweise zwar innerhalb der Steuereinrichtung bereits vordefiniert. Es besteht aber die Möglichkeit, auszuwählen, welche Regeln angewandt werden sollen. Weiterhin besteht die Möglichkeit, die ausgewählten Regeln zu parametrieren. Auch dies fällt unter den Sachverhalt, dass die Steuereinrichtung die Regeln entgegennimmt.

Beispielsweise können die Regeln eine Schrittweite einer Änderung eines die Kontur des Werkstücks nicht beeinflussenden Parameters der Sollbearbeitung spezifizieren. Dadurch kann das Rattern unterdrückt werden, ohne die Kontur des fertigen Werkstücks zu beeinflussen. Beispiele derartiger Parameter sind insbesondere eine Spindeldrehzahl und eine Vorschubgeschwindigkeit. Es kommen aber auch andere Parameter in Frage, beispielsweise Parameter von Regelkreisen, insbesondere Proportionalverstärkungen und/oder Nachstellzeiten von Lagereglern.

Es ist prinzipiell möglich, dass die Steuereinrichtung beim Auftreten der unerwünschten Schwingungen die spezifizierten Parameter immer weiter ändert. Vorzugsweise aber spezifizieren die Regeln einen Maximalwert der Änderung des die Kontur des Werkstücks nicht beeinflussenden Parameters der Sollbearbeitung. Dadurch kann gewährleistet werden, dass der jeweilige Parameter innerhalb eines technologisch sinnvollen Bereichs bleibt.

Vorzugsweise spezifizieren die Regeln eine Haltezeit, während derer die modifizierte Sollbearbeitung nach einer Modifizierung der Bearbeitung unverändert beibehalten wird. Dadurch wird erreicht, dass nach einer Modifizierung der Bearbeitung, also nach beispielsweise einer Änderung eines Parameters, zunächst abgewartet wird, ob das Rattern abklingt und die Bearbeitung sich somit stabilisiert.

Im einfachsten Fall wird nur eine einzelne Regel mit einem einzigen Parameter vorgegeben. Es ist jedoch ebenso möglich, dass durch entsprechende Vorgabe der Regeln auch eine Abfolge und/oder eine Kopplung der Änderung mehrerer die Kontur des Werkstücks nicht beeinflussender Parameter der Sollbearbeitung spezifiziert werden. Beispielsweise kann vorgegeben werden, dass zunächst ein Parameter (beispielsweise die Spindeldrehzahl) geändert wird, wenn diese Änderung jedoch nicht zu einem Abklingen des Ratterns führt, danach zusätzlich ein anderer die Kontur des Werkstücks nicht beeinflussender Parameter der Sollbearbeitung (beispielsweise die Vorschubgeschwindigkeit) geändert wird. Auch kann spezifiziert werden, dass im Falle eines Ratterns simultan mehrere Parameter geändert werden, beispielsweise sowohl die Spindeldrehzahl als auch die Vorschubgeschwindigkeit. Auch andere Ausgestaltungen sind möglich.

Weiterhin ist es möglich, dass die Regeln spezifizieren, ob in dem Fall, dass nach einer Modifizierung der Bearbeitung des Werkstücks die unerwünschten Schwingungen nicht mehr auftreten, die Modifikation wieder rückgängig gemacht wird. Falls die Modifikation nicht wieder rückgängig gemacht wird, ist einerseits mit hoher Wahrscheinlichkeit sichergestellt, dass das Rattern auch weiterhin unterdrückt bleibt. In vielen Fällen tritt das Rattern jedoch nur an einigen Stellen der Bearbeitung auf. In diesem Fall würde die Werkzeugmaschine mit reduzierter Produktivität arbeiten, ohne dass dies erforderlich ist. Durch die Vorgabe (bzw. Auswahl) einer entsprechenden Regel kann vorgegeben werden, welche Maßnahme bevorzugt ist.

Vorzugsweise spezifizieren die Regeln in diesem Fall auch, in welchen Stufen die Modifikation wieder rückgängig gemacht wird. Die Stufen korrespondieren im Kern mit der Schrittweite bei der Modifikation. Es ist aber möglich, sie unabhängig von der Schrittweite bei der Modifikation festzulegen. Vorzugsweise spezifizieren die Regeln weiterhin eine Haltezeit, während derer die Bearbeitung nach einer Rückgängigmachung unverändert beibehalten wird. Dadurch kann vor einer noch weiteren Rückgängigmachung abgewartet werden, ob sich nicht doch wieder ein Rattern einstellt.

Vorzugsweise spezifizieren die Regeln, welche Maßnahmen ergriffen werden, wenn die unerwünschten Schwingungen trotz Modifikation der Bearbeitung weiterhin auftreten. Beispielsweise kann dadurch die Möglichkeit gegeben werden, trotz Rattern die Bearbeitung durchzuführen (und eine eventuell erforderliche Nachbearbeitung anderweitig vorzunehmen) oder - beispielsweise zur Vermeidung von Maschinenschäden oder zur Vermeidung der Produktion von Ausschuss - die Bearbeitung abzubrechen.

Vorzugsweise speichert die Steuereinrichtung dann, wenn nach einer Modifikation der Bearbeitung die unerwünschten Schwingungen nicht mehr auftreten, die aufgefundene Art der Bearbeitung ab, so dass sie bei einer späteren Bearbeitung eines weiteren, zu dem Werkstück gleichartigen Werkstücks wieder abrufbar ist. Dadurch ist es möglich, bei der späteren Bearbeitung des Weiteren Werkstücks entweder an der entsprechenden Stelle der Bearbeitung - alternativ unbedingt oder nur in dem Fall, dass an der entsprechenden Stelle der Bearbeitung wieder ein Rattern auftritt, - direkt die aufgefundene Art der Bearbeitung abzurufen. Dadurch kann beispielsweise ein zeitaufwändiges und bezüglich der Bearbeitung suboptimales Herantasten an die ordnungsgemäße Art der Bearbeitung vermieden werden.

Es ist möglich, dass die Schnittstelle als Mensch-Maschine-Schnittstelle ausgebildet ist. In diesem Fall nimmt die Steuereinrichtung die Regeln von einer Bedienperson entgegen. Alternativ ist es möglich, dass die Schnittstelle als Schnittstelle zu einer Speichereinrichtung ausgebildet. In diesem Fall liest die Steuereinrichtung die Regeln aus der Speichereinrichtung aus.

Die Aufgabe wird weiterhin durch ein Steuerprogramm mit den Merkmalen des Anspruchs 12 gelöst. Erfindungsgemäß bewirkt die Abarbeitung des Maschinencodes durch die Steuereinrichtung, dass die Steuereinrichtung ein erfindungsgemäßes Betriebsverfahren ausführt.

Die Aufgabe wird weiterhin durch eine Steuereinrichtung mit den Merkmalen des Anspruchs 13 gelöst. Erfindungsgemäß ist die Steuereinrichtung mit einem erfindungsgemäßen Steuerprogramm programmiert, so dass die Steuereinrichtung im Betrieb ein erfindungsgemäßes Betriebsverfahren ausführt.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: eine Werkzeugmaschine und ihre Komponenten,
- FIG 2: ein Ablaufdiagramm,
- FIG 3 bis 9: Regeln und
- FIG 10: ein Ablaufdiagramm.

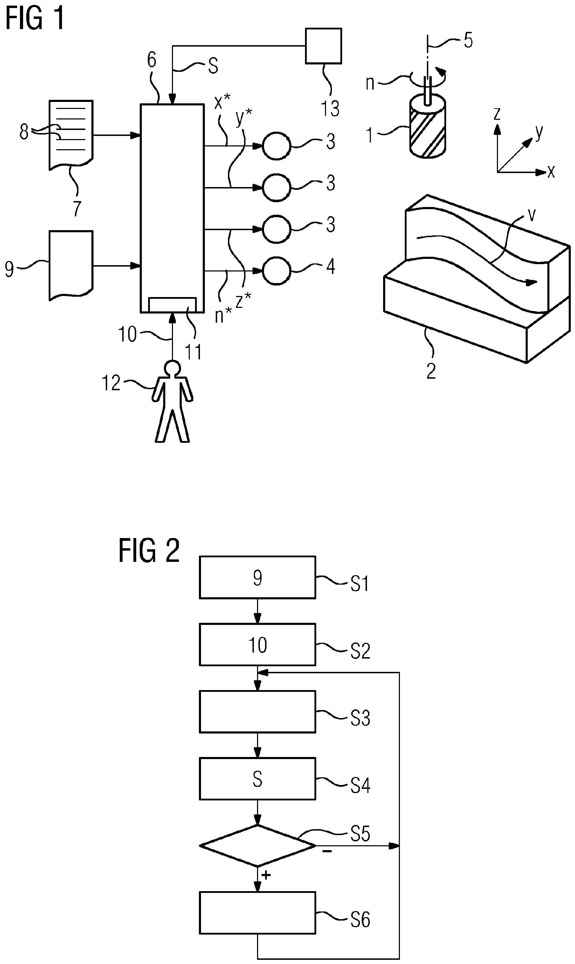

Gemäß FIG 1 soll mittels eines Werkzeugs 1 einer Werkzeugmaschine ein Werkstück 2 spanabhebend bearbeitet werden. Die spanabhebende Bearbeitung kann beispielsweise ein Fräsen sein. Zur Bearbeitung des Werkstücks 2 wird das Werkzeug 1 relativ zum Werkstück 2 mittels einer Anzahl von lagegeregelten Achsen 3 der Werkzeugmaschine lagegeregelt an das Werkstück 2 angestellt. Mittels der Achsen 3 kann nach Bedarf die translatorische Position x, y, z und gegebenenfalls auch die rotatorische Orientierung des Werkzeugs 1 relativ zum Werkstück 2 eingestellt werden. Die Sollwerte x*, y*, z* für die lagegeregelten Achsen 3 und damit die Position x, y, z und gegebenenfalls auch die Orientierung des Werkzeugs 1 relativ zum Werkstück 2 werden kontinuierlich geändert. Das Werkzeug 1 wird dadurch mit einer Bahngeschwindigkeit v entlang einer abzufahrenden Bahn verfahren. Während des Verfahrens des Werkzeugs 1 relativ zum Werkstück 2 wird weiterhin mittels einer weiteren Achse 4 der Werkzeugmaschine das Werkzeug 1 mit einer Drehzahl n um eine Rotationsachse 5 des Werkzeugs 1 rotiert. Der weiteren Achse 4 kann ein entsprechender Drehzahlsollwert n* vorgegeben werden. In diesem Fall ist die weitere Achse 4 drehzahlgeregelt. Alternativ kann die weitere Achse 4 auch lagegeregelt betrieben werden. In diesem Fall muss der vorgegebene Lagesollwert entsprechend variiert werden.

Die Werkzeugmaschine wird von einer Steuereinrichtung 6 gesteuert. Die Steuereinrichtung 6 ist in der Regel als numerische Steuerung ausgebildet. Die Steuereinrichtung 6 ist mit einem Steuerprogramm 7 programmiert. Das Steuerprogramm 7 umfasst Maschinencode 8, der von der Steuereinrichtung 6 abarbeitbar ist. Die Programmierung der Steuereinrichtung 6 mit dem Steuerprogramm 7 bzw. die Abarbeitung des Maschinencodes 8 durch die Steuereinrichtung 6 bewirkt, dass die Steuereinrichtung 6 ein Betriebsverfahren ausführt, das nachstehend in Verbindung mit FIG 2 näher erläutert wird.

Gemäß FIG 2 nimmt die Steuereinrichtung 6 in einem Schritt S1 eine Sollbearbeitung 9 entgegen. Entsprechend der Sollbearbeitung 9 soll das Werkstück 2 durch das Werkzeug 1 bearbeitet werden. In der Sollbearbeitung 9 sind neben der Abfolge der Lagesollwerte x*, y*, z* (und damit der zu abzufahrenden Bahn) auch Bearbeitungsparameter wie beispielsweise der Drehzahlsollwert n* für die weitere Achse 4 und ein Sollwert v* für die Bahngeschwindigkeit v abschnittsweise spezifiziert. Die Sollbearbeitung 9 kann beispielsweise in Form eines Fachleuten allgemein bekannten Teileprogramms vorgegeben werden.

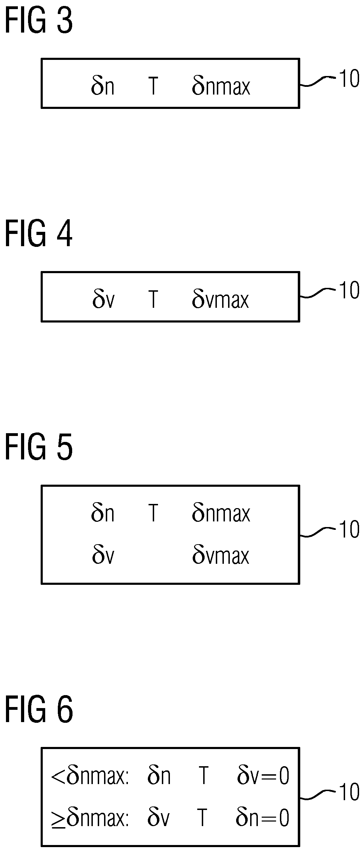

Weiterhin nimmt die Steuereinrichtung 6 in einem Schritt S2 Regeln 10 (siehe FIG 3 bis 9) entgegen. Die Regeln 10 können spezifisch für die jeweilige Sollbearbeitung 9 definiert sein. Sie können der Steuereinrichtung 6 entsprechend der Darstellung in FIG 1 über eine Mensch-Maschine-Schnittstelle 11 von einer Bedienperson 12 vorgegeben werden. Alternativ können sie der Steuereinrichtung 6 über eine entsprechende Schnittstelle über eine Speichereinrichtung vorgegeben werden. In diesem Fall liest die Steuereinrichtung 6 die Regeln 10 aus der Speichereinrichtung aus. Die Speichereinrichtung kann innerhalb der Steuereinrichtung 6 angeordnet sein. Sie kann auch lösbar mit der Steuereinrichtung 6 verbindbar sein (beispielsweise im Falle einer Ausgestaltung der Schnittstelle als USB-Schnittstelle) oder (beispielsweise im Falle der Ausgestaltung der Schnittstelle als Anbindung an ein Rechnernetz) Bestandteil eines anderen Rechners sein.

Die Regeln 10 definieren, auf welche Art und Weise die Bearbeitung des Werkstücks 2 durch das Werkzeug 1 modifiziert werden soll, wenn während der Bearbeitung des Werkstücks 2 durch das Werkzeug 1 unerwünschte Schwingungen auftreten. Mögliche Regeln 10 werden später noch näher erläutert werden. Wichtig ist aber, dass durch die Regeln 10 nicht die herzustellende Kontur des Werkstücks 2 geändert wird, sondern Parameter, welche die Kontur nicht beeinflussen. Beispiele derartiger Parameter sind die bereits erwähnte Bahngeschwindigkeit v und die ebenfalls bereits erwähnte Drehzahl n. Insbesondere können die Regeln 10 eine Schrittweite δn, δv der Änderung des entsprechenden Parameters n, v der Sollbearbeitung 9 spezifizieren.

Entsprechend der Darstellung in FIG 2 wird der Schritt S1 vor dem Schritt S2 ausgeführt. Es könnte aber auch umgekehrt sein. Entscheidend ist, dass die Vorgabe der Regeln 10 vor der Bearbeitung des Werkstücks 2 durch das Werkzeug 1 erfolgt.

In einem Schritt S3 beginnt die Steuereinrichtung 6 sodann mit der Bearbeitung des Werkstücks 2 durch das Werkzeug 1. Dies erfolgt dadurch, dass die Steuereinrichtung 6 die Werkzeugmaschine und insbesondere die lagegeregelten Achsen 3 und die weitere Achse 4 entsprechend der Sollbearbeitung 9 steuert. Dadurch wird das Werkstück 2 entsprechend der spezifizierten Sollbearbeitung 9 bearbeitet.

Während der Bearbeitung des Werkstücks 2 erfasst die Steuereinrichtung 6 in einem Schritt S4 mittels (mindestens) eines Sensors 13 ein Sensorsignal S. Aufbauend auf dem Schritt S4 prüft die Steuereinrichtung 6 durch Auswertung des Signals in einem Schritt S5, ob während der Bearbeitung des Werkstücks 2 durch das Werkzeug 1 eine unerwünschte Schwingung (= Rattern) auftritt. Geeignete Signale sind Fachleuten allgemein bekannt. Das erfasste Signal kann beispielsweise ein Schallsignal (Luftschall oder Körperschall), eine Störung in der Drehzahl n des Werkzeugs 1 oder ein anderes Signal sein. Es kann diesbezüglich auf die bereits erwähnte WO 2017/012 801 A1 verwiesen werden.

Wenn die Steuereinrichtung 6 im Schritt S5 kein Rattern feststellt, geht die Steuereinrichtung 6 zum Schritt S3 zurück. Sie setzt also die Bearbeitung des Werkstücks 2 durch das Werkzeug 1 ohne Modifikation der Sollbearbeitung 9 fort. Wenn die Steuereinrichtung 6 im Schritt S5 hingegen ein Rattern feststellt, geht die Steuereinrichtung 6 zu einem Schritt S6 über. Im Schritt S6 modifiziert die Steuereinrichtung 6 die Bearbeitung des Werkstücks 2 durch das Werkzeug 1 entsprechend der vorgegebenen Regeln 10.

Nachstehend werden in Verbindung mit den FIG 3 bis 9 mögliche Regeln 10 erläutert.

Beispielsweise ist es möglich, dass eine Regel 10 darin besteht, dass entsprechend der Darstellung in FIG 3 eine Drehzahländerung δn vorgegeben wird. In diesem Fall wird, falls Rattern auftritt und die entsprechende Regel 10 ausgeführt wird, die Solldrehzahl n* (und in der Folge auch die tatsächliche Drehzahl n) um die Drehzahländerung δn geändert. Die Drehzahländerung δn wird in der Regel negativ sein (Absenken der Drehzahl n). Sie kann aber im Einzelfall auch positiv sein (Erhöhen der Drehzahl n).

Vorzugsweise wird im Falle der in FIG 3 dargestellten Regel 10 ein weiterer Parameter vorgegeben, nämlich eine Haltezeit T. Die Haltezeit T spezifiziert, wie lange nach einer Anwendung der Regel 10 die entsprechende Regel 10 nicht erneut angewandt wird. Nach einer Modifizierung wird also die modifizierte Sollbearbeitung während der Haltezeit T unverändert beibehalten. Dadurch wird erreicht, dass sich der transiente Zustand der Werkzeugmaschine, der durch das Ändern der Drehzahl n entsteht, wieder in einen stabilen Zustand übergeht. Erst danach wird erneut geprüft, ob weiterhin Rattern auftritt.

Alternativ oder zusätzlich zur Haltezeit T kann im Falle der in FIG 3 dargestellten Regel 10 ein weiterer Parameter vorgegeben werden, nämlich eine maximale Drehzahländerung δnmax. Die maximale Drehzahländerung δnmax gibt an, um welchen Wert die Drehzahl n durch (gegebenenfalls wiederholte) Anwendung der in FIG 3 dargestellten Regel 10 maximal geändert werden darf. Die maximale Drehzahländerung δnmax hat das gleiche Vorzeichen wie die Drehzahländerung δn. Anstelle der maximalen Drehzahländerung δnmax könnte auch ein entsprechender Zahlenwert vorgegeben werden, beispielsweise dass die in FIG 3 dargestellte Regel maximal fünfmal oder achtmal angewandt werden darf.

In FIG 3 ist eine Regel 10 dargestellt, bei welcher im Falle von Rattern die Drehzahl n des Werkzeugs 1 geändert wird. In analoger Weise ist es entsprechend der Darstellung in FIG 4 möglich, eine gleichartige Regel 10 für die Bahngeschwindigkeit v zu formulieren. Auch hier wird zumindest ein Wert für die Geschwindigkeitsänderung δv vorgegeben, wobei die Geschwindigkeitsänderung δv vorzugsweise durch eine Haltezeit T und/oder eine maximale Geschwindigkeitsänderung δvmax ergänzt ist. Die Geschwindigkeitsänderung δv ist in der Regel negativ (Verringerung der Geschwindigkeit v), kann in Ausnahmefällen aber auch positiv sein (Erhöhung der Geschwindigkeit v). Die Haltezeit T kann unabhängig von der Haltezeit T von FIG 3 spezifiziert werden.

Es ist auch möglich, eine Regel 10 zu formulieren, bei welcher mehrere die Kontur des Werkstücks 2 nicht beeinflussende Parameter der Sollbearbeitung 9 spezifiziert werden. Beispielsweise kann entsprechend der Darstellung in FIG 5 eine Regel 10 spezifiziert werden, in der sowohl eine Drehzahländerung δn als auch eine Geschwindigkeitsänderung δv vorgegeben werden. In diesem Fall können, falls maximale Änderungswerte δnmax, δvmax mit spezifiziert werden, die maximale Drehzahländerung δnmax und die maximale Geschwindigkeitsänderung δvmax unabhängig voneinander festgelegt werden. Durch die Vorgabe unterschiedlicher maximaler Änderungen δnmax, δvmax kann beispielsweise erreicht werden, dass beim Auftreten von Rattern zunächst sowohl die Drehzahl n als auch die Bahngeschwindigkeit v geändert werden. Wenn jedoch später erneut Rattern auftritt, wird gegebenenfalls nur noch derjenige Parameter n, v geändert, der seinen Maximalwert δnmax, δvmax noch nicht erreicht hat. Die Haltezeit T ist jedoch - zumindest in der Regel - einheitlich für beide Änderungen. Auch hier kann Haltezeit T aber unabhängig von der Haltezeit T der FIG 3 und 4 spezifiziert werden.

Weiterhin können die Regeln 10 auch eine Abfolge von mehreren die Kontur des Werkstücks 2 nicht beeinflussenden Parametern der Sollbearbeitung 9 spezifizieren. Beispielsweise kann entsprechend der Darstellung in FIG 6 eine Regel 10 spezifiziert werden, gemäß der die Geschwindigkeitsänderung δv den Wert 0 aufweist (also keine Änderung der Bahngeschwindigkeit v vorgenommen wird), solange die Drehzahländerung δn noch nicht ihren Maximalwert δnmax erreicht hat. Wenn dies hingegen der Fall ist, wird im Falle eines weiteren Ratterns eine Geschwindigkeitsänderung δv vorgenommen. Auch hier können nach Bedarf wieder eine Haltezeit T und/oder eine maximale Geschwindigkeitsänderung δvmax spezifiziert werden. Auch diese Haltezeit T kann unabhängig von den Haltezeiten T der FIG 3 bis 5 spezifiziert werden. Auch können die beiden Haltezeiten T der Regel 10 von FIG 6 alternativ einheitlich oder unabhängig voneinander spezifiziert werden.

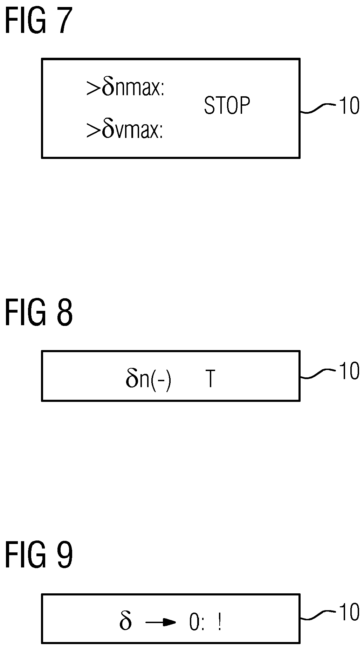

Weiterhin ist es möglich, eine Regel 10 zu spezifizieren, in der vorgegeben wird, welche Maßnahmen ergriffen werden, wenn das Rattern trotz Modifikation der Bearbeitung weiterhin auftritt. Beispielsweise kann entsprechend der Darstellung in FIG 7 vorgegeben werden, dass in diesem Fall ein Abbruch ("STOP") der Bearbeitung erfolgen soll.

Es ist sogar möglich, zu spezifizieren, ob nach einer Modifizierung der Bearbeitung des Werkstücks 2 die Modifikation in dem Fall, dass das Rattern nicht mehr auftritt, wieder rückgängig gemacht wird. Beispielsweise kann entsprechend der Darstellung in FIG 8 eine mit der Regel 10 von FIG 3 korrespondierende Regel 10 aufgestellt werden, gemäß der die Modifikation der Drehzahl n des Werkzeugs 1 wieder rückgängig gemacht wird, sofern nach der Modifikation das Rattern nicht mehr auftritt. Die Drehzahländerung δn von FIG 8 spezifiziert, in welchen Stufen die Modifikation von Regel 3 wieder rückgängig gemacht wird.

Das Vorzeichen der Drehzahländerung δn von FIG 8 muss invers zum Vorzeichen der Drehzahländerung δn von FIG 3 sein. Dies ist in FIG 8 dadurch angedeutet, dass der dort spezifizierten Drehzahländerung δn in Klammern ein "-" nachgestellt ist. Der Betrag der Drehzahländerung δn von FIG 8 kann aber unabhängig vom Wert der Drehzahländerung δn von FIG 3 bestimmt werden. Auch die Haltezeit T kann, sofern sie spezifiziert wird, unabhängig von den Haltezeiten T der FIG 3 bis 6 spezifiziert werden. Der Maximalwert der Änderung der Regel 10 gemäß FIG 8 ergibt sich ganz von selbst dadurch, dass bei einem Gesamtwert der Änderung von 0 die Drehzahl n wieder erreicht ist, die durch die Sollbearbeitung 9 spezifiziert ist.

Zu der Regel 10 von FIG 8 analoge Regeln 10 sind selbstverständlich auch für die Regeln 10 gemäß den FIG 4 bis 6 implementierbar.

Es ist sogar möglich, eine Regel 10 vorzugeben, gemäß der die Steuereinrichtung 6 die aufgefundene Art der Bearbeitung abspeichert, wenn nach einer Modifikation der Bearbeitung das Rattern nicht mehr auftritt. Die Ausführung dieser Regel 10 setzt entsprechend der Darstellung in FIG 9 zunächst voraus, dass überhaupt eine Modifikation der Bearbeitung des Werkstücks 2 vorgenommen wurde, angedeutet in FIG 9 durch ein "δ". Weiterhin muss die Steuereinrichtung 6 feststellen, dass nach der Modifikation der Bearbeitung das Rattern nicht mehr auftritt. Dies ist in FIG 9 durch einen von dem "δ" zu einer 0 zeigenden Pfeil angedeutet. Das Abspeichern ist in FIG 9 durch ein "!" angedeutet. Dadurch ist die abgespeicherte Art der Bearbeitung bei einer späteren Bearbeitung eines weiteren, zu dem Werkstück 2 gleichartigen Werkstücks wieder abrufbar, so dass sie gegebenenfalls - mit oder ohne vorherige Prüfung, ob bei dem gleichartigen Werkstück ebenfalls ein Rattern auftritt - sofort anwendbar ist.

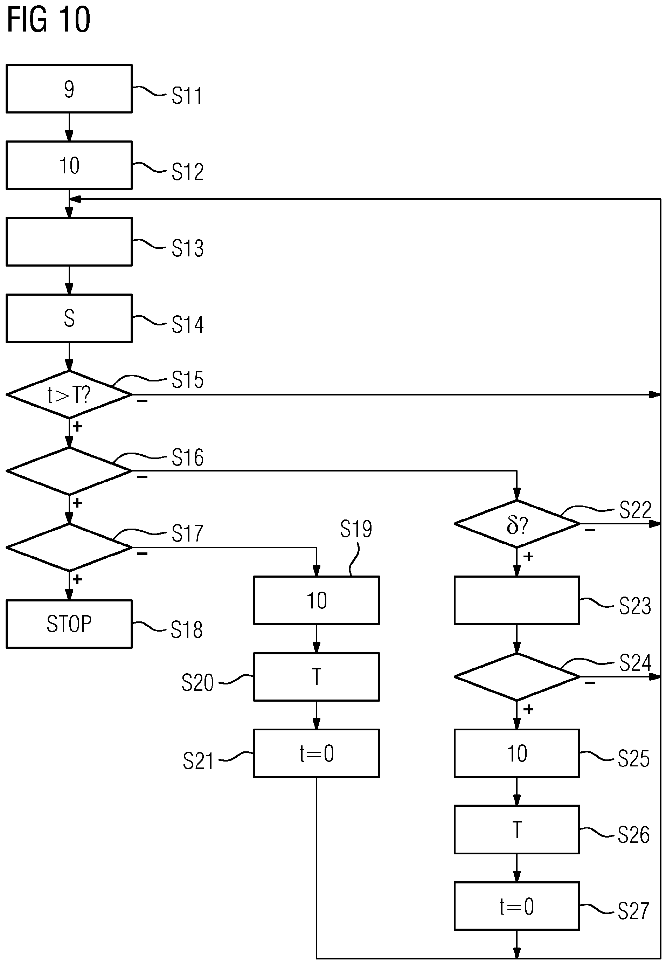

Das obenstehend in Verbindung mit FIG 2 bereits erläuterte Prinzip der vorliegenden Erfindung kann daher entsprechend FIG 10 ausgestaltet sein. FIG 10 zeigt hierbei zwar gleichzeitig eine Kombination mehrerer vorteilhafter Ausgestaltungen der erfindungsgemäßen Vorgehensweise. Die vorteilhaften Ausgestaltungen sind jedoch unabhängig voneinander implementierbar.

Gemäß FIG 10 nimmt die Steuereinrichtung 6 in einem Schritt S11 eine Sollbearbeitung 9 entgegen. Weiterhin nimmt die Steuereinrichtung 6 in einem Schritt S12 Regeln 10 entgegen. In einem Schritt S13 beginnt die Steuereinrichtung 6 sodann mit der Bearbeitung des Werkstücks 2 durch das Werkzeug 1. Während der Bearbeitung des Werkstücks 2 erfasst die Steuereinrichtung 6 in einem Schritt S14 mittels (mindestens) eines Sensors 13 ein Sensorsignal S. Die Schritte S11 bis S14 korrespondieren 1:1 mit den Schritten S1 bis S4 von FIG 2.

In einem Schritt S15 prüft die Steuereinrichtung 6, ob eine aufgelaufene Zeit t eine Haltezeit T übersteigt. Auf die Festlegung der relevanten Haltezeit T wird später noch eingegangen. Solange die aufgelaufene Zeit t die Haltezeit T nicht übersteigt, geht die Steuereinrichtung 6 zum Schritt S13 zurück. Anderenfalls prüft die Steuereinrichtung 6 durch Auswertung des Signals in einem Schritt S16, ob während der Bearbeitung des Werkstücks 2 durch das Werkzeug 1 Rattern auftritt. Der Schritt S16 korrespondiert 1:1 mit dem Schritt S5 von FIG 2.

Falls Rattern auftritt, prüft die Steuereinrichtung 6 in einem Schritt S17, ob das Rattern trotz Modifikation der Bearbeitung weiterhin auftritt. Die Prüfung des Schrittes S17 kann beispielsweise mit umfassen, ob zulässige Änderungen von Parametern n, v der Bearbeitung des Werkstücks 2 bereits ihre maximalen Änderungswerte δnmax, δvmax erreicht haben.

Falls die Steuereinrichtung 6 im Schritt S17 feststellt, dass das Rattern trotz Modifikation der Bearbeitung weiterhin auftritt, führt die Steuereinrichtung 6 in einem Schritt S18 diejenige Regel 10 aus, in der spezifiziert ist, wie in diesem Fall verfahren werden soll. Beispielsweise kann die Steuereinrichtung 6 entsprechend der Darstellung in FIG 10 - vergleiche die in FIG 7 dargestellte Regel 10 - die weitere Bearbeitung des Werkstücks 2 abbrechen.

Anderenfalls, wenn also die Bearbeitung noch nicht modifiziert wurde oder die zulässigen Änderungen von Parametern n, v der Bearbeitung des Werkstücks 2 ihre maximalen Änderungswerte δnmax, δvmax noch nicht erreicht haben, modifiziert die Steuereinrichtung 6 in einem Schritt S19 die Bearbeitung des Werkstücks 2 durch das Werkzeug 1 entsprechend der vorgegebenen Regeln 10. Der Schritt S19 entspricht im Wesentlichen dem Schritt S6 von FIG 2.

In einem Schritt S20 setzt die Steuereinrichtung 6 die durch die entsprechende Regel 10 definierte Haltezeit T. Weiterhin setzt die Steuereinrichtung 6 in einem Schritt S21 die aufgelaufene Zeit t auf den Wert 0. Sodann geht die Steuereinrichtung 6 zum Schritt S13 zurück.

Wenn die Steuereinrichtung 6 im Schritt S16 feststellt, dass kein Rattern auftritt, geht die Steuereinrichtung 6 zu einem Schritt S22 über. Im Schritt S22 prüft die Steuereinrichtung 6, ob bereits eine Modifikation erfolgt ist. Wenn dies nicht der Fall ist, geht die Steuereinrichtung 6 zum Schritt S13 zurück. Anderenfalls speichert die Steuereinrichtung 6 in einem Schritt S23 die aufgefundene Art der Bearbeitung, beispielsweise die aktuelle Drehzahl n und/oder die aktuelle Bahngeschwindigkeit v.

In einem Schritt S24 prüft die Steuereinrichtung 6, ob sie die zuvor vorgenommene Modifikation wieder rückgängig machen soll. Wenn dies nicht der Fall ist, geht die Steuereinrichtung 6 zum Schritt S13 zurück. Anderenfalls macht die Steuereinrichtung 6 in einem Schritt S25 (selbstverständlich unter Anwendung der entsprechenden Regeln 10) die zuvor vorgenommene Modifikation vollständig oder teilweise wieder rückgängig. In einem Schritt S26 setzt die Steuereinrichtung 6 die durch die entsprechende Regel 10 definierte Haltezeit T. Weiterhin setzt die Steuereinrichtung 6 in einem Schritt S27 die aufgelaufene Zeit t auf den Wert 0. Sodann geht die Steuereinrichtung 6 zum Schritt S13 zurück.

Selbstverständlich sind auch weitere Ausgestaltungen möglich. So ist es beispielsweise möglich, dass die Steuereinrichtung 6 zwischen der Ausführung der Schritte S16 und S17 prüft, ob für die Situation der Bearbeitung des Werkstücks 2, die gerade ansteht, bereits eine Art der Bearbeitung gespeichert ist, bei der kein Rattern auftritt. In diesem Fall kann die Steuereinrichtung 6 gegebenenfalls die entsprechende Art der Bearbeitung direkt anwählen und von dort aus direkt zum Schritt S13 zurückgehen. Weiterhin ist es auch möglich, andere Regeln 10 zu spezifizieren, beispielsweise eine Regel 10, deren Ausführung eine Modulation der Drehzahl n bewirkt, oder eine Regel 10, deren Ausführung eine Änderung von Reglerparametern der lagegeregelten Achsen 3 und/oder der drehzahlgeregelten Achse 4 bewirkt. Auch ist es möglich, dass die Steuereinrichtung 6 über die Schnittstelle 11 zusätzlich eine Meldung ausgibt, wenn ein Rattern festgestellt wurde. Falls ein Rattern durch Modifikation der Bearbeitung beseitigt wurde, ist es weiterhin möglich, dass die Steuereinrichtung 6 die entsprechenden Modifikationen über die Schnittstelle 11 ausgibt.

Zusammengefasst betrifft die vorliegende Erfindung somit folgenden Sachverhalt:
Eine Steuereinrichtung 6 einer Werkzeugmaschine nimmt eine Sollbearbeitung 9 entgegen, entsprechend derer ein Werkstück 2 durch ein Werkzeug 1 der Werkzeugmaschine bearbeitet werden soll. Die Steuereinrichtung 6 nimmt weiterhin vor der Bearbeitung des Werkstücks 2 über eine Schnittstelle 11 Regeln 10 entgegen. Die Regeln 10 definieren, auf welche Art und Weise im Falle von während der Bearbeitung des Werkstücks 2 auftretenden unerwünschten Schwingungen die Bearbeitung des Werkstücks 2 durch das Werkzeug 1 modifiziert werden soll. Die Steuereinrichtung 6 steuert die Werkzeugmaschine, so dass das Werkstück 2 durch das Werkzeug 1 bearbeitet wird. Die Steuereinrichtung 6 ermittelt während der Bearbeitung des Werkstücks 2 durch Auswertung erfasster Sensorsignale S, ob unerwünschte Schwingungen auftreten oder nicht. In dem Fall, dass die unerwünschten Schwingungen nicht auftreten, führt die Steuereinrichtung 6 die Bearbeitung entsprechend der Sollbearbeitung 9 aus. In dem Fall, dass die unerwünschten Schwingungen auftreten, modifiziert die Steuereinrichtung 6 die Bearbeitung entsprechend der vorgegebenen Regeln 10.

Die vorliegende Erfindung weist viele Vorteile auf. Insbesondere wird der Bedienperson 12 ermöglicht, die Regeln 10 der Steuereinrichtung 6 derart vorzugeben, dass die Reaktion der Steuereinrichtung 6 auf Rattern individuell auf die Gegebenheiten der Bearbeitung zugeschnitten ist. Die Bedienperson 12 wird in die Lage versetzt, ihr Erfahrungswissen zur Vermeidung von Rattern direkt in die Steuereinrichtung 6 einzubringen.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Bearbeitungsverfahren für ein Werkstück (2) durch ein Werkzeug (1) einer Werkzeugmaschine,
- wobei eine Steuereinrichtung (6) der Werkzeugmaschine eine Sollbearbeitung (9) entgegennimmt, entsprechend derer das Werkstück (2) durch das Werkzeug (1) bearbeitet werden soll,
- wobei die Steuereinrichtung (6) die Werkzeugmaschine steuert, so dass das Werkstück (2) durch das Werkzeug (1) bearbeitet wird,
- wobei die Steuereinrichtung (6) während der Bearbeitung des Werkstücks (2) durch das Werkzeug (1) durch Auswertung erfasster Sensorsignale (S) ermittelt, ob unerwünschte Schwingungen auftreten oder nicht,
**dadurch gekennzeichnet,**
- **dass** die Steuereinrichtung (6) der Werkzeugmaschine vor der Bearbeitung des Werkstücks (2) durch das Werkzeug (1) über eine Schnittstelle (11) Regeln (10) entgegennimmt,
- **dass** die Regeln (10) definieren, auf welche Art und Weise im Falle von während der Bearbeitung des Werkstücks (2) durch das Werkzeug (1) auftretenden unerwünschten Schwingungen die Bearbeitung des Werkstücks (2) durch das Werkzeug (1) modifiziert werden soll, und
- **dass** die Steuereinrichtung (6) in dem Fall, dass die unerwünschten Schwingungen nicht auftreten, die Bearbeitung entsprechend der Sollbearbeitung (9) ausführt und in dem Fall, dass die unerwünschten Schwingungen auftreten, die Bearbeitung entsprechend der vorgegebenen Regeln (10) modifiziert.

2. Bearbeitungsverfahren nach Anspruch 1,
**dadurch gekennzeichnet,**
**dass** die Regeln (10) eine Schrittweite (δn, δv) einer Änderung eines die Kontur des Werkstücks (2) nicht beeinflussenden Parameters (n, v) der Sollbearbeitung (9) spezifizieren.

3. Bearbeitungsverfahren nach Anspruch 2,
**dadurch gekennzeichnet,**
**dass** die Regeln (10) einen Maximalwert (δnmax, δvmax) der Änderung des die Kontur des Werkstücks (2) nicht beeinflussenden Parameters (n, v) der Sollbearbeitung (9) spezifizieren.

4. Bearbeitungsverfahren nach Anspruch 1, 2 oder 3,
**dadurch gekennzeichnet,**
**dass** die Regeln (10) eine Haltezeit (T) spezifizieren, während derer die modifizierte Sollbearbeitung nach einer Modifizierung der Bearbeitung unverändert beibehalten wird.

5. Bearbeitungsverfahren nach einem der obigen Ansprüche,
**dadurch gekennzeichnet,**
**dass** die Regeln (10) eine Abfolge und/oder eine Kopplung der Änderung mehrerer die Kontur des Werkstücks (2) nicht beeinflussender Parameter (n, v) der Sollbearbeitung (9) spezifizieren.

6. Bearbeitungsverfahren nach einem der obigen Ansprüche,
**dadurch gekennzeichnet,**
**dass** die Regeln (10) spezifizieren, ob in dem Fall, dass nach einer Modifizierung der Bearbeitung des Werkstücks (2) die unerwünschten Schwingungen nicht mehr auftreten, die Modifikation wieder rückgängig gemacht wird.

7. Bearbeitungsverfahren nach Anspruch 6,
**dadurch gekennzeichnet,**
**dass** die Regeln (10) spezifizieren, in welchen Stufen (δn, δv) die Modifikation wieder rückgängig gemacht wird.

8. Bearbeitungsverfahren nach Anspruch 7,
**dadurch gekennzeichnet,**
**dass** die Regeln (10) eine Haltezeit (T) spezifizieren, während derer die Bearbeitung nach einer Rückgängigmachung unverändert beibehalten wird.

9. Bearbeitungsverfahren nach einem der obigen Ansprüche,
**dadurch gekennzeichnet,**
**dass** die Regeln (10) spezifizieren, welche Maßnahmen ergriffen werden, wenn die unerwünschten Schwingungen trotz Modifikation der Bearbeitung weiterhin auftreten.

10. Bearbeitungsverfahren nach einem der obigen Ansprüche,
**dadurch gekennzeichnet,**
**dass** die Steuereinrichtung (6) dann, wenn nach einer Modifikation der Bearbeitung die unerwünschten Schwingungen nicht mehr auftreten, die aufgefundene Art der Bearbeitung abspeichert, so dass sie bei einer späteren Bearbeitung eines weiteren, zu dem Werkstück (2) gleichartigen Werkstücks wieder abrufbar ist.

11. Bearbeitungsverfahren nach einem der obigen Ansprüche,
**dadurch gekennzeichnet,**
**dass** die Schnittstelle (11) als Mensch-Maschine-Schnittstelle ausgebildet ist und die Steuereinrichtung (6) die Regeln (10) von einer Bedienperson (12) entgegennimmt oder dass die Schnittstelle (11) als Schnittstelle zu einer Speichereinrichtung ausgebildet ist, aus der die Steuereinrichtung (6) die Regeln (10) ausliest.

12. Steuerprogramm für eine Steuereinrichtung (6) einer Werkzeugmaschine, wobei das Steuerprogramm Maschinencode (8) umfasst, wobei die Abarbeitung des Maschinencodes (8) durch die Steuereinrichtung (6) bewirkt, dass die Steuereinrichtung (6) ein Betriebsverfahren nach einem der obigen Ansprüche ausführt.

13. Steuereinrichtung einer Werkzeugmaschine, wobei die Steuereinrichtung mit einem Steuerprogramm (7) nach Anspruch 12 programmiert ist, so dass die Steuereinrichtung im Betrieb ein Betriebsverfahren nach einem der Ansprüche 1 bis 11 ausführt.
